(19)

Europäisches
Patentamt
European
Patent Office
Office européen
des brevets

(11)  **EP 2 575 010 A2**

(12)  # EUROPEAN PATENT APPLICATION

(43) Date of publication:
    **03.04.2013  Bulletin 2013/14**

(51) Int Cl.:
    ***G06F 3/03*** (2006.01)

(21) Application number: **12186591.9**

(22) Date of filing: **28.09.2012**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority: **29.09.2011  KR 20110099423**

(71) Applicants:
    • **Samsung Electronics Co., Ltd
      Gyeonggi-do 443-742 (KR)**
    • **Korea University Research and Business
      Foundation
      Seongbuk-gu
      Seoul 136-701 (KR)**

(72) Inventors:
    • **Yun, In-Kuk
      443-742 Gyeonggi-do (KR)**

    • **Kim, Chang-Su
      Seoul (KR)**
    • **Lee, Chul-Woo
      Seoul (KR)**
    • **Jang, Won-Dong
      Seoul (KR)**
    • **Seo, Seong-Min
      443-742 Gyeonggi-do (KR)**
    • **Lee, Jeong-Seok
      443-742 Gyeonggi-do (KR)**
    • **Choi, Jeong-Seok
      443-742 Gyeonggi-do (KR)**
    • **Koh, Yeong-Jun
      Seoul (KR)**

(74) Representative: **Grünecker, Kinkeldey,
    Stockmair & Schwanhäusser
    Leopoldstrasse 4
    80802 München (DE)**

(54)  **Display apparatus including pattern and method of generating pattern in display apparatus**

(57)    A display apparatus includes a plurality of color filters corresponding to subpixels forming pixels of the display apparatus, and a black matrix formed among the plurality of color filters, and the plurality of color filters includes a pattern indicating an absolute location of each pixel of the display apparatus. A pattern indicating a location of a pixel may be formed in subpixels of a display apparatus and inputting may be performed and thus, a display panel may not affect a thickness as opposed to a digital paper, luminance and a contrast ratio of a display screen may be secured, and location information of the pixel may be intensively represented. Accordingly, the display apparatus may be applicable to a display apparatus having a huge size and a high resolution.

FIG.1

EP 2 575 010 A2

**Description**

**BACKGROUND OF THE INVENTION**

1. Field of the Invention

The present invention relates to a display apparatus, and more particularly, to a display apparatus including a pattern and a method of generating the pattern in the display apparatus.

2. Description of the Related Art

As display technology has developed, various display apparatuses have developed to be bi-directional entertainment devices that allow communication with users beyond a conventional concept of displaying. Accordingly, varied display apparatuses have been developed that recognize an input when a user directly touches a display screen with a finger gesture or a touch pen or performs a corresponding gesture.

Recently, a scheme that senses a location on a display screen by recognizing a pattern, and performs inputting based on the sensed location, has been developed and used in a display apparatus. The scheme based on the pattern-recognition may recognize a pattern formed on a display through use of an inputting device (hereinafter referred to as an electronic-pen) equipped with a camera such as an electronic-pen and the like, may detect a location of the electronic-pen, and perform inputting based on the detected location value. The inputting scheme may capture a display formed on a region indicated by the electronic-pen through use of the camera that captures an image in a direction of a pen point of the electronic-pen, may detect a prearranged pattern from the captured image, and may recognize a location or a command indicated by the electronic-pen.

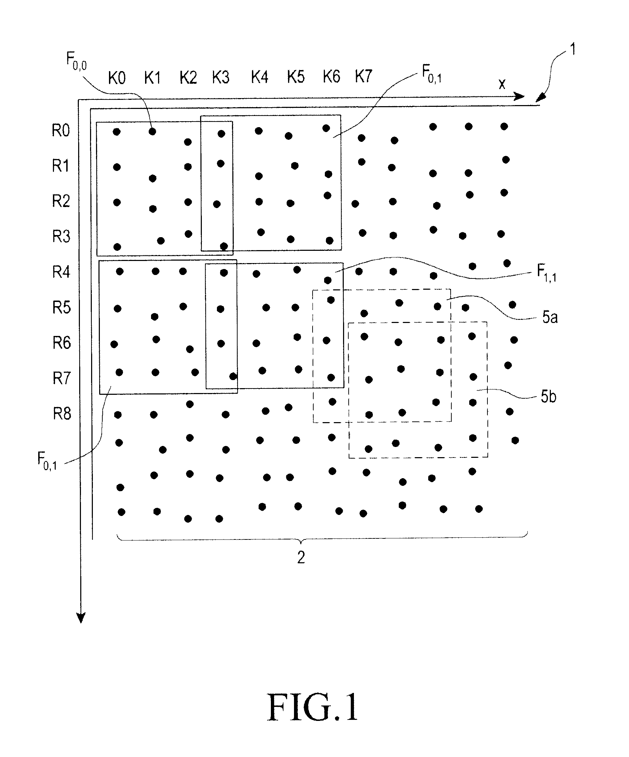

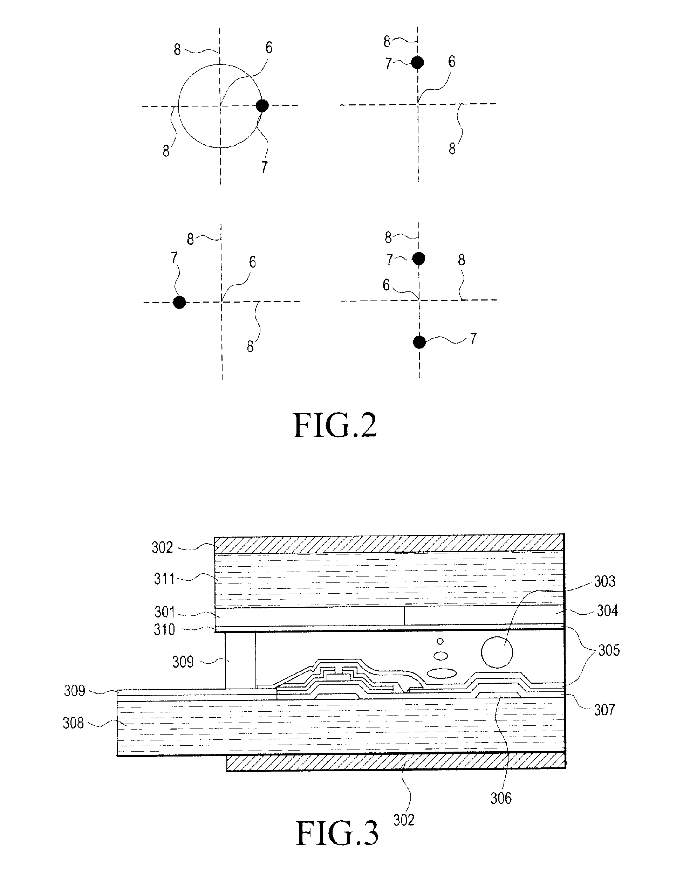

FIG. 1 illustrates a pattern formed in a display apparatus for a conventional electronic-pen inputting scheme. FIG. 1 shows an example of a pattern that is formed by disposing, on a digital paper (1), circular dots (2) in a prearranged shape through use of a paint that absorbs an infra red (IR) light source. Referring to FIG. 1, the digital paper (1) may be a two-dimensional plane including an X axis and a Y axis, and may include a raster line, such as K0 through K7 in a direction of the X axis and R0 through R8 in a direction of the Y axis. The raster refers to a two-dimensional array representing an image, and the circular dots (2) may be disposed based on the raster line. Each of the circular dots (2) may have a value for indicating a location of a predetermined region. FIG. 1 provides an example of using a scheme that may define digitalized coordinates based on a predetermined interval, may capture 4x4 blocks or more, and may extract coordinates from the captured image so as to recognize a location. For example, a pattern of circular dots of 4x4 blocks in F0, 0 region may be recognized and a location of F0, 0 region may be determined. Although overlapping regions may exist, recognition with respect to overlapping blocks as shown in 5a region and 5b region may be available. The circular dots (2) will be described in detail with reference to FIG. 2. FIG. 2 illustrates an example of a location of a circular dot in a pattern formed in a display apparatus for a conventional electronic-pen inputting scheme. Referring to FIG. 2, a circular dot (7) in a conventional pattern is disposed to be close to a point (6) where horizontal and vertical raster lines (8) intersect, and a value of the circular dot may be determined based on a distance between the corresponding intersecting point (6) and the circular dot (7) and locational directions of the corresponding intersecting point (6) and the circular dot (7) so that the value may be used for determining the location.

The digital paper (1) corresponds to a paper-based scheme and thus, the digital paper (1) on which a pattern is separately printed may need to be attached on an LCD panel when the digital paper (1) is used in a display apparatus such as a liquid crystal display (LCD) and the like, and there is a drawback in that an electronic-pen may not be applicable in a region where the digital paper (1) is not attached.

In general, the LCD panel may be formed of a subpixel corresponding to one of color filters from among an R color filter, a G color filter, and a B color filter, and a black matrix. When the digital paper (1) is attached on a surface of the display panel and is used, the display panel may become thick. Also, when a subpixel is covered by the digital paper (1), luminance of the display may be deteriorated. Also, when a material that reflects an IR light source, as opposed to a paint that absorbs the IR, is used for producing the pattern of the digital paper (1), the subpixel of the display may be affected and thus, a contrast ratio (brightness) and the luminance may be deteriorated.

A size of a screen of the display apparatus has been increased and a resolution has been more and more increased and thus, an amount of information to be used for recognizing a location indicated by an electronic-pen in the display screen has been also increased. Therefore, in a display apparatus having a huge size and a high resolution, a code pattern for recognizing information associated with a location of an electronic-pen may need to be information-intensive. For example, although the full high definition (FHD) level display apparatus market has been recently mainstreamed, the ultra high definition (UHD) level display apparatus market will occupy the next generation market. For location information corresponding to about ten million pixels, such as the UHD level display, a code pattern may need to be more information-intensive.

However, the conventional method that uses the digital paper (1) is associated with a physical manufacturing scheme, it may be inefficient to manufacture an information-intensive code pattern. When a portion of the code pattern of the digital paper (1) may lose or may have an error value, there may be difficulty in checking the loss and the error. The conventional method that uses the digital paper (1) may use only a predetermined pattern once the pattern is determined and thus, technology leakages may readily occur.

## SUMMARY OF THE INVENTION

Accordingly, an aspect of the present invention is to solve the above-mentioned problems occurring in the prior art, and to provide a display apparatus including a pattern that does not affect a thickness of a display panel and is capable of securing luminance and a contrast ratio of a display screen when an input is determined in the display apparatus, and a method of generating a pattern in the display apparatus.

Another aspect of the present invention is to provide a display apparatus including a pattern that is capable of intensively representing location information of a pixel so that a location of an input is determined in the display apparatus having a huge size and a high resolution, and a method of generating a pattern in the display apparatus.

Another aspect of the present invention is to provide a display apparatus including a pattern to be used for checking an error when a portion of the pattern indicating a location of a pixel is lost or has an error, and a method of generating a pattern in the display apparatus.

Another aspect of the present invention is to provide a display apparatus including an encrypted pattern that is difficult to be intuitively decrypted and prevents the leakage of technology associated with the pattern, and a method of generating a pattern in the display apparatus.

In accordance with an aspect of the present invention, there is provided a display apparatus including a pattern, the apparatus including a plurality of color filters corresponding to subpixels forming pixels of the display apparatus, and a black matrix formed among the plurality of color filters, and the plurality of color filters includes a pattern indicating an absolute location of each pixel of the display apparatus.

In accordance with another aspect of the present invention, there is provided a method of generating a pattern in a display apparatus, the method including determining a basic pattern block size to indicate an absolute location of a pixel on a display panel, determining points where a plurality of holes are to be formed in subpixels included in each block region determined based on the basic pattern block size, and the plurality of holes are used for calculating an absolute location of a corresponding pixel, and generating a pattern by forming a corresponding hole in each point based on an absolute location of a pixel included in each block region, among the points where the plurality of holes are to be formed.

## BRIEF DESCRIPTION OF THE DRAWINGS

The above and other aspects, features and advantages of the present invention will be more apparent from the following detailed description taken in conjunction with the accompanying drawings, in which:

FIG. 1 is a diagram illustrating a pattern formed in a display apparatus for a conventional electronic-pen inputting scheme;
FIG. 2 is a diagram illustrating an example of a location of a circular dot in a pattern formed in a display apparatus for a conventional electronic-pen inputting scheme;
FIG. 3 is a sectional diagram illustrating a liquid crystal panel of a display apparatus according to an embodiment of the present invention;
FIG. 4 is a diagram illustrating subpixel regions and a black matrix region according to an embodiment of the present invention;
FIG. 5 is a diagram illustrating a pattern to be used for determining a location of a pixel based on subpixel regions and a black matrix region according to an embodiment of the present invention;
FIG. 6 is a diagram illustrating an example where holes are disposed according to an embodiment of the present invention;
FIG. 7 is a diagram illustrating an example of a point corresponding to a hole that is formed in a subpixel according to an embodiment of the present invention;
FIG. 8 is a diagram illustrating an example of a shuffle table according to an embodiment of the present invention;
FIG. 9 is a diagram illustrating an example of a shuffle table determining scheme for encrypting position holes according to an embodiment of the present invention;
FIG. 10 is a flowchart illustrating a process of generating a pattern in a display apparatus according to an embodiment of the present invention; and
FIG. 11 is a diagram illustrating an example of a pattern formed to indicate a location of a pixel in a display apparatus according to an embodiment of the present invention.

**DETAILED DESCRIPTION OF EMBODIMENTS OF THE PRESENT INVENTION**

Hereinafter, exemplary embodiments of the present invention will be described with reference to the accompanying drawings. In the following description, the same elements will be designated by the same reference numerals although they are shown in different drawings. Further, various specific definitions found in the following description, such as specific values of packet identifications, contents of displayed information, etc., are provided only to help general understanding of the present invention, and it is apparent to those skilled in the art that the present invention can be implemented without such definitions. Further, in the following description of the present invention, a detailed description of known functions and configurations incorporated herein will be omitted when it may make the subject matter of the present invention rather unclear.

The present invention proposes a pattern that is applicable to a display apparatus used in an electronic device such as a portable phone, a computer, an electronic blackboard, a tablet PC, an electronic-book, and the like and that is used for indicating a location of a pixel of a display panel, and a pattern generating method. In particular, a pattern indicating a location of a pixel formed of subpixels may be formed in the corresponding subpixels of a display apparatus including pixels formed of subpixels (R,G, and B). Therefore, embodiments of the present invention may detect the pattern formed in the subpixels of the display apparatus through use of a camera, and may decrypt location and gesture information based on the detected pattern. The display apparatus may correspond to any of devices including pixels formed of subpixels, such as a liquid crystal display (LCD), a plasma display panel (PDP), an organic light-emitting display (OLED), an electronic paper, and the like.

In the specifications, the configuration and the operational principle of embodiments of the present invention will be described using an LCD display panel as an example. FIG. 3 illustrates a section of a liquid crystal panel of a display apparatus according to an embodiment of the present invention. Referring to FIG. 3, a foreside polarizing plate 302 is disposed on a foreside of the liquid crystal panel, a color filter substrate 311 is disposed below the foreside polarizing plate 302, and a black matrix 301 and a color filter 304 are disposed below the color filter substrate 311. A thin film transistor (TFT) substrate is disposed below the black matrix 301 and the color filter 304. As shown in FIG. 3, in the TFT substrate, a common electrode (ITO) 310 and a pixel electrode (ITO) 307 are disposed on a TFT-array substrate 308. Two alignment layers 305, a spacer 303, a capacitance storage (CS) 306, a sealant 309 are included between the common electrode 310 and the pixel electrode 307. A backside polarizing plate 302 is disposed below the TFT-array substrate 308.

According to embodiments of the present invention, the black matrix 301 indicating a boundary in the color filter 304 may include a material or a structure that is capable of absorbing a light source, or may include a material or a structure that selectively reflects a light source. When a light source of an electronic-pen is a light source that generates an IR, the black matrix 301 may be formed of carbon black that is an IR absorber. Also, the color filter 304 may be formed of an R color filter, a G color filter, and B color filter. Each of the R color filter, the G color filter, and B color filter may correspond to a subpixel, and a set of the R, G, and B color filters may correspond to a single pixel.

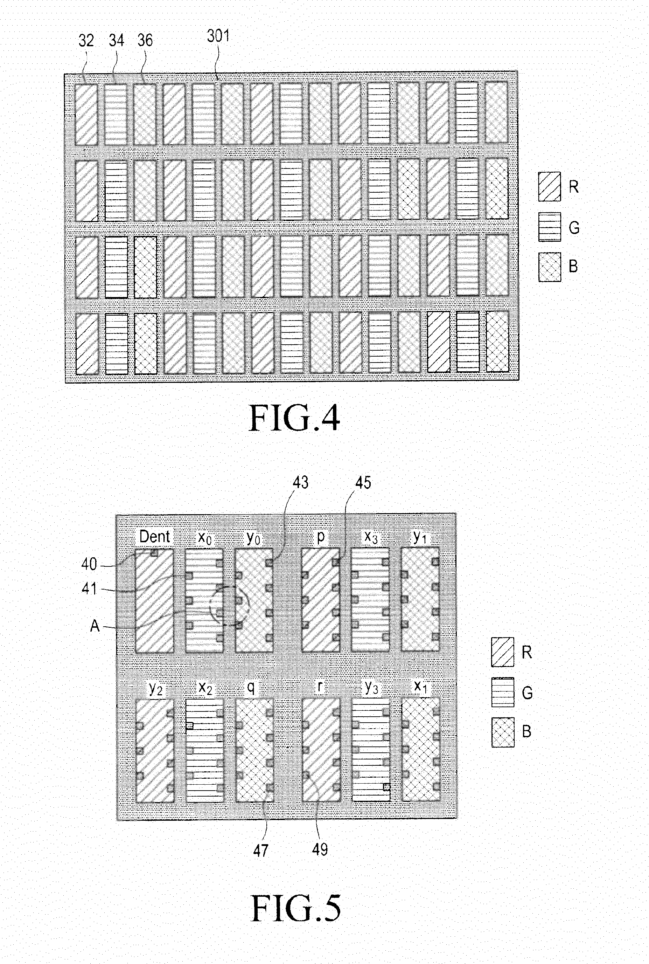

FIG. 4 illustrates subpixel regions and a black matrix region according to an embodiment of the present invention. Referring to FIG. 4, a pattern that is capable of determining a location of a pixel through use of subpixels 32, 34, and 36 and the black matrix 301 may be generated, the location of the pixel may be detected through use of a device (an electronic-pen and the like) that is capable of capturing the pattern and decrypting the captured pattern, and a location of an input of the electronic-pen and an input of a gesture may be recognized based on the detected location.

Hereinafter, the pattern to be used for determining the location of the pixel in the display apparatus will be described in detail.

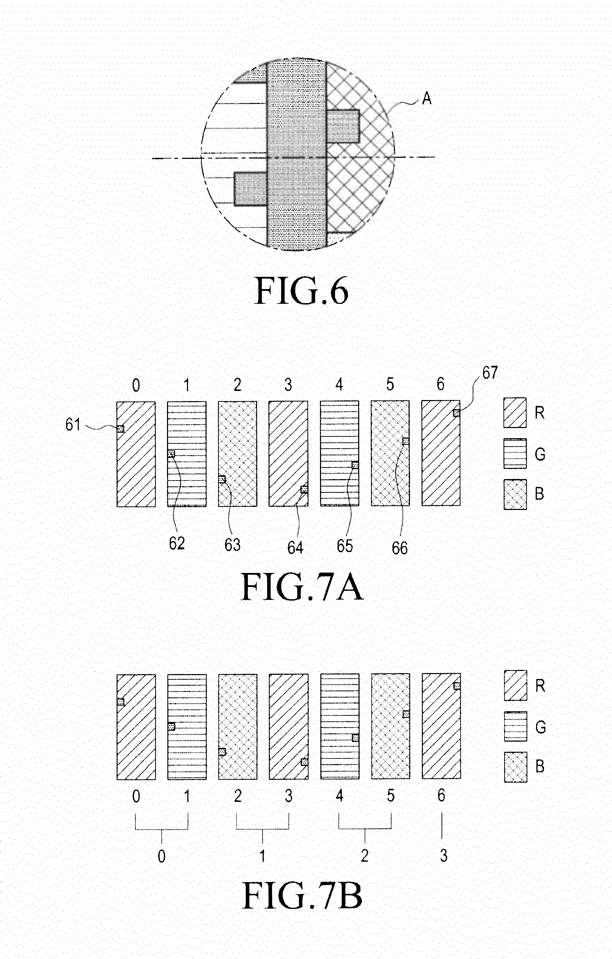

FIG. 5 illustrates a pattern to be used for determining a location of a pixel based on the subpixel regions and the black matrix region according to an embodiment of the present invention. Referring to FIG. 5, each of subpixels, that is, R, G, and B, may include a single hole or a plurality of holes in a predetermined internal location based on a pattern that is predetermined for determining a location of a pixel. In this example, the hole is in a shape formed by leading a black matrix region into each subpixel region, that is, R, G, and B, and may be formed of the same material as a material of the black matrix region. Also, the hole may be formed of another material that may be recognized to be a pattern in R, G, and B regions, and may be disposed in another location. FIG. 6 illustrates an example where holes are disposed according to an embodiment of the present invention. As illustrated in FIG. 6, it is desirable that holes are separately disposed to have a maximum interval and to not overlap each other so as to be clearly recognized.

Holes included in subpixels may include a dent hole, an X coordinate hole, a Y coordinate hole, and an error detection hole. The dent hole is a reference for calculating an absolute location value of a pixel, and may be formed on a point where the dent hole is readily distinguished from other holes. The X coordinate hole may be formed on a point indicating a value to be used for calculating a horizontal-coordinate value of a pixel. The Y coordinate hole may be formed on a point indicating a value to be used for calculating a vertical-coordinate value of the pixel. The error detection hole may be formed on a point indicating a value to be used for determining whether the points where the X coordinate hole and the Y coordinate hole are formed are correct. The subpixels may include a subpixel including a dent hole, a subpixel including an X coordinate hole, a subpixel including a Y coordinate hole, and a subpixel including an error detection hole.

The case where a 2 x 2 pixels-based pattern is formed will be described for example. FIG. 5 illustrates a 2 x 2 pixels-based pattern structure. Referring to FIG. 5, a pattern for indicating an absolute location of each of the 2 x 2 pixels is formed in 12 subpixels included in the 2 x 2 (4) pixels. In particular, FIG. 5 illustrates points where holes are to be formed for indicating a pattern corresponding to an absolute location of a pixel of a display apparatus that supports a resolution of up to 4802 x 2744 in a X coordinate value (width) x a Y coordinate value (height).

Referring to the points where the holes are to be formed, a dent hole 40 is formed on a single subpixel corresponding to adent subpixel to indicate a reference for calculating an absolute location of a pixel. To support the resolution of 4802 x 2744, 7 septenary numbers (X0, X1, X2, X3, Y1, Y2, and Y3) and one quaternary number Y0 may be used as the X coordinate value and the Y coordinate value.

When the seven septenary numbers and one quaternary number are used, position holes may be formed on the seven points in four subpixels (X0, X1, X2, and X3) for 4802 which is a maximum value for the X coordinate value. The seven points will be described for example. FIG. 7 illustrates an example of a point corresponding to a hole that is formed in a subpixel according to an embodiment of the present invention. The diagram (a) of FIG. 7 shows points where holes are to be formed when a septenary number is used. Referring to the diagram (a) of FIG. 7, seven points 61 through 67 may indicate points indicating values of 0 through 6, respectively, and a X coordinate value may be calculated based on Equation 1.

$$\text{Equation 1 : X coordinate value} = 73 \times X3 + 72 \times X2 + 7 \times X1 + X0$$

Also, position holes may be formed on seven points in four subpixels (Y0, Y1, Y2, and Y3) for 2744 which is a maximum value of a Y value. In this example, the seven points in the subpixels of Y1, Y2, and Y3 may indicate values of 0 through 6, respectively, and the values of the seven points in the subpixel of Y0 may be different since the subpixel of Y0 uses a quaternary number. A point where a hole is formed in the subpixel corresponding to Y0 is illustrated in the diagram (b) of FIG. 7. Referring to the diagram (b) of FIG. 7, the seven points in the subpixel corresponding to Y0 may have values in a range of 0 through 3. Therefore, the Y coordinate value may be calculated based on Equation 2.

$$\text{Equation 2 : Y coordinate value} = 72 \times 4 \times Y3 + 7 \times 4 \times Y2 + 4 \times Y1 + Y0$$

Parity holes may be formed on the seven points in three subpixels p, q, and r by applying a parity check scheme so as to determine whether the points where the X coordinate hole and the Y coordinate hole are formed are correct, that is, so as to determine whether an error occurs. The parity check scheme may refer to a scheme that additionally adds a parity checker bit so that a number of bits indicating 1 in a conventional binary code to be an even number of bits or an odd number of bits, and detects an error. According to an embodiment of the present invention, a septenary number is used and thus, a parity checker may have a value in a range of 0 through 6.

Referring to FIG. 5, Points corresponding to the seven holes in p, q, and r subpixels may be points for indicating a parity bit, that is, a value obtained by adding up values of predetermined position holes. Therefore, the values of p, q, and r may be calculated based on parity check equations of Equation 3.

$$\text{Equation 3: } p = \text{modulo7}(X3 + Y1 + X0)$$
$$q = \text{modulo7}(X2 + Y2)$$
$$r = \text{modulo7}(X1 + Y3 + Y0)$$

The p value may be a reference for determining whether an error occurs with respect to values of X3, Y1, and X0. The q value may be a reference for determining whether an error occurs with respect to values of X2 and Y2. Also, the r value may be a reference for determining whether an error occurs with respect to values of X1, Y3, and Y0.

In other words, when p, q, and r are decoded and a result value of a modulo operation is different from a value of a parity hole, it is determined that an error occurs. Therefore, when one error occurs, error detection may be secured.

The error detection scheme as described in the foregoing may need to be applicable when a location is determined in the case of a partial combination of two basic unit patterns (floating property). To enable the parity check to be performed based on the floating property, position hole information may need to be converted based on a location of the parity hole information. In this example, when an error occurs in a hole corresponding to a low digit, an error may also occur in a hole corresponding to a high digit of the hole where the error occurs. When only one parity check equation is used, holes including errors may be included in the same parity check equation and thus, may have the same result as when errors occurs in two or more holes.

The problem may be solved based on a scheme that includes position holes associated with the same coordinate axis in different parity check equations. Since an X axis and a Y axis have 4 position holes and thus, a total of 4 parity check equations may be required. However, excluding the dent hole and the position holes, available holes may need to be included in three subpixels and thus, up to 3 parity check equations may be used. Accordingly, position holes associated with the same coordinate axis may be inevitably included in a single parity check equation. Therefore, an error occurring in a position hole corresponding to the lowest digit may have the lowest probability of affecting a position hole corresponding to the highest digit and thus, it is desirable to use a scheme that includes the position hole corresponding to the lowest digit and the position hole corresponding to the highest digit in the same parity check equation, as shown in the p, q, and r equations of Equation 3.

Although the points and values of holes have been described based on the 2 x 2 pixels-based pattern structure according to embodiments of the present invention, it is apparent to those skilled in the art that a pattern may be formed based on a single pixel and a pattern may be formed based on various pixel units such as a 2x3 pixel unit, a 3x3 pixel unit, and the like, and a point and a value of a hole may be appropriately used based on a corresponding pixel unit.

The pattern formed in the display apparatus configured as described in the foregoing may have a regular rule and thus, the pattern may be readily decrypted when the rule is recognized. Therefore, an embodiment of the present invention may provide an encrypted pattern so that the pattern formed in the display apparatus may not be readily decrypted. In particular, the pattern may be generated based on a shuffle table so that the generated pattern may not be readily imitated.

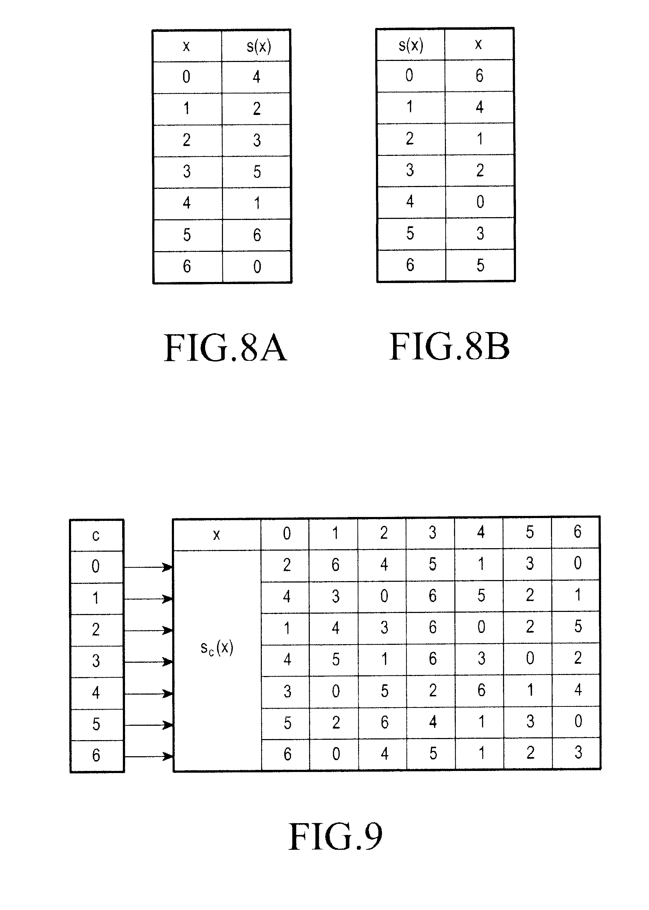

FIG. 8 illustrates an example of a shuffle table according to an embodiment of the present invention. The diagram (a) of FIG. 8 is an example of a shuffle table for encrypting, and the diagram (b) of FIG. 8 is an example of a shuffle table for inverse-encrypting. Referring to the diagram (a) of FIG. 8, holes included in each subpixel excluding a dent may be formed in locations having values in a range of 0 through 6 and thus, a shuffle value (s(x)) for converting a value (x) in a range of 0 through 6 may be arranged in a table, and a location of each hole may be converted into a location corresponding to a shuffle value so that an encrypted pattern may be provided. For example, when a point where an original hole is formed corresponds to a point indicating 0, a hole may be formed on a point indicating 4 based on the shuffle table.

In this example, a plurality of shuffle tables may be used, a predetermined shuffle table from among the plurality of shuffle tables may be determined, and the encrypted pattern may be provided. In particular, a predetermined first shuffle table may be used for parity holes of p, q, and r that have a high frequency of change in points where holes are formed and for a position hole of Y0. For remaining holes, a second shuffle table to be applied to the remaining holes may be determined based on the first shuffle table value associated with the parity holes of p, q, and r, and the position hole of Y0, and points where the remaining holes are formed may be converted into points corresponding to values based on the determined second shuffle table.

FIG. 9 illustrates an example of a shuffle table determining scheme for encrypting position holes according to an embodiment of the present invention. Referring to FIG. 9, a c value may be a shuffle value that is obtained by converting parity holes of p, q, and r, and a position hole of Y0 through use of a first shuffle table, and may indicate a value that is a reference for determining a second shuffle table to be applied to remaining holes. Sc(x) may indicate the second shuffle table determined based on the reference value. Values for the remaining holes may be determined based on the second shuffle table and an encrypted pattern may be provided. In this example, the second shuffle table may be determined based on values of other holes, in addition to a scheme that determines the second shuffle table based on the parity holes of p, q, and r, and the position hole of Y0.

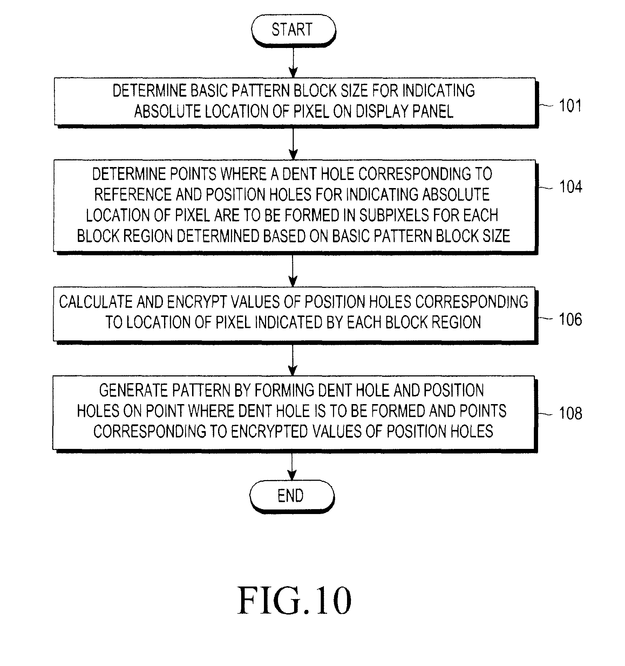

Hereinafter, a method of generating a pattern for determining a location of a pixel will be described. FIG. 10 illustrates a process of generating a pattern in a display apparatus according to an embodiment of the present invention.

Referring to FIG. 10, the display apparatus according to an embodiment of the present invention may determine a basic pattern block size required for obtaining an absolute location of a single pixel on a display panel in operation 101. For example, to obtain the absolute location of the single pixel, a pattern indicating the absolute location of the pixel may be formed on a plurality of pixels (for example, 2x2 pixels). In this example, a size of the plurality of pixels where the pattern is formed to obtain the absolute location of the pixel may be referred to as the basic pattern block size.

When the basic pattern block size is determined as described in the foregoing, the display apparatus may determine points where a dent hole corresponding to a reference and position holes for indicating the absolute location of the pixel are to be formed in subpixels for each block region in operation 104. In this example, points where parity holes for checking an error of the position holes for indicating the absolute location of the pixel are to be formed may also be determined.

For example, when the basic pattern block size is 2x2 pixels (including 12 subpixels), a point for a dent hole corresponding to a single subpixel for indicating a reference to be used for calculating an absolute location value of the pixel may be determined. Also, points for 7 position holes may be determined in 8 subpixels through use of 7 septenary numbers (X0, X1, X2, X3, Y1, Y2, and Y3) and one quaternary number (YO) as an X coordinate value and a Y coordinate value. Points for 7 parity holes may be determined in remaining 3 subpixels so as to check an error of the position holes.

When the points where the dent hole and the position holes are to be formed are determined for each block region, the display apparatus may calculate values of the position holes corresponding to the location of the pixel to be indicated by each block region, and may encrypt the calculated values in operation 106. In the case of 2 x 2 pixels (including 12 subpixels), values of position holes to be formed in 8 subpixels (X0, X1, X2, X3, Y1, Y2, Y3, and Y0) may be obtained through use of Equation 1 and Equation 2, so as to indicate the location of the pixel (an X coordinate value and a Y coordinate value). Also, when the values of the position holes are obtained, the values of the position holes may be converted into encrypted values based on a shuffle table that is described in the foregoing.

When the values of the position holes are calculated and encrypted, the display apparatus may form the dent hole and the position holes on the point where the dent hole is to be formed and points corresponding to the encrypted values of the position holes, and may generate a pattern indicating the location of the pixel in operation 108. In this example, parity holes may also be formed and may be included in the pattern so as to check errors.

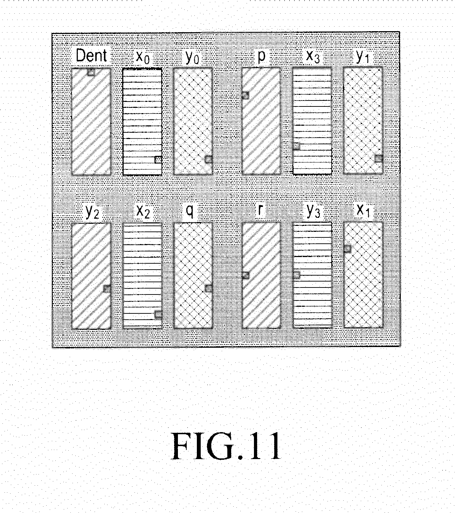

FIG. 11 illustrates an example of a pattern formed to indicate a location of a pixel in a display apparatus according to an embodiment of the present invention. FIG. 11 shows a pattern when values of X0, X1, X2, X3, Y1, Y2, Y3, and Y0 (encrypted values of position holes) correspond to X0=3, X1=0, X2=3, X3=2, Y0=3, Y1=3, Y2=4, and Y3=1, respectively, and values of p, q, and r (values of parity holes) correspond to p=0, q=4, and r=1, respectively. The pattern generated according to embodiments of the present invention may be recognized by an inputting device including a camera, such as an electronic-pen and the like, and a location of a corresponding pixel may be detected and thus, inputting may be performed based on the detected location value of the pixel.

According to the embodiments of the present invention, inputting may be performed by forming a pattern indicating a location of a pixel in subpixels of a display apparatus and thus, a display panel may not affect a thickness as opposed to a digital paper, and luminance and a contrast ratio of a display screen may be secured. According to the embodiments of the present invention, a pattern for indicating a location of a pixel may be formed in subpixels of a display apparatus based on a number of predetermined holes and locations of the holes, and location information of the pixel may be intensively represented and thus, the embodiments of the present invention may be applicable to a display apparatus having a huge size and a high resolution. According to the embodiments of the present invention, when a portion of a pattern is lost or has an error, error checking may be performed and thus, the embodiments of the present invention may be robust against the error and may be stable. According to the embodiments of the present invention, a pattern may be formed based on an encrypted value and thus, the pattern of a display apparatus may not be intuitively decrypted and the leakage of technology associated with the pattern may be prevented.

While the invention has been shown and described with reference to certain exemplary embodiments thereof, it will be understood by those skilled in the art that various changes in form and details may be made therein without departing from the spirit and scope of the invention as defined by the appended claims. For example, although the embodiments of the present invention have been described based on a 2 x 2 pixels-based pattern structure for example, various pixel-based pattern structures may be used. Although a shuffle table is used in the embodiments of the present invention, a different encrypting scheme for converting a value of each hole may be applicable.

**Claims**

1.   A display apparatus including a pattern, the apparatus comprising:

a plurality of color filters corresponding to subpixels forming pixels of the display apparatus; and
a black matrix formed among the plurality of color filters,
wherein the plurality of color filters includes a pattern indicating an absolute location of each pixel of the display apparatus.

2.   The apparatus of claim 1, wherein the pattern indicating the absolute location of each pixel is generated when a plurality of holes are formed in a region of the plurality of color filters corresponding to the subpixels forming the pixels.

3.   The apparatus of claim 2, wherein the plurality of holes includes:

a dent hole indicating a reference for calculating an absolute location of a corresponding pixel; and
position holes to be used for calculating a horizontal-axis coordinate value of the corresponding pixel and a vertical-axis coordinate value of the corresponding pixel.

4. The apparatus of claim 3, wherein the position holes are formed on points indicating values to be used for calculating the horizontal-axis coordinate value of the corresponding pixel and the vertical-axis coordinate value of the corresponding pixel in the region of the plurality of color filters.

5. The apparatus of claim 4, wherein the plurality of holes further includes parity holes to be used for checking errors of the position holes.

6. The apparatus of claim 5, wherein the parity holes are formed on points indicating values to be used for checking errors of the points where the position holes are formed.

7. The apparatus in any of claims 3 to 6, wherein the values corresponding to the points where the plurality of holes are formed are encrypted based on a predetermined shuffle table, and the plurality of holes are formed on points indicating the encrypted values.

8. The apparatus in any of claims 3 to 6, wherein the plurality of holes are formed by leading a material identical to a region of the black matrix into the color filter region.

9. The apparatus in any of claims 3 to 6, wherein the plurality of color filters includes an R color filter, a G color filter, and a B color filter.

10. A method of generating a patter in a display apparatus, the method comprising:

determining a basic pattern block size to indicate an absolute location of a pixel on a display panel;
determining points where a plurality of holes are to be formed in subpixels included in each block region determined based on the basic pattern block size, and the plurality of holes are used for calculating an absolute location of a corresponding pixel; and
generating a pattern by forming a corresponding hole in each point based on an absolute location of a pixel included in each block region, among the points where the plurality of holes are to be formed.

11. The method of claim 10, wherein the plurality of holes includes:

a dent hole indicating a reference for calculating an absolute location of a corresponding pixel; and
position holes to be used for calculating a horizontal-axis coordinate value of the corresponding pixel and a vertical-axis coordinate value of the corresponding pixel.

12. The method of claim 11, wherein the plurality of holes further includes parity holes for checking errors of the position holes.

13. The method of claim 12, wherein determining of the points where the plurality of holes are to be formed comprises:

determining a point where the dent hole that is a reference for an absolute location of a pixel on a display panel is to be formed; and
determining points where the position holes indicating values to be used for calculating a horizontal-axis coordinate value of the pixel and a vertical-axis coordinate value of the pixel on the display panel are to be formed.

14. The method of claim 13, wherein determining of the points where the plurality of holes are to be formed further comprises:

determining points where the parity holes indicating values to be used for determining whether the points for the position holes are correct, are to be formed.

15. The method in any of claims 13 to 14, wherein determining of the points where the plurality of holes are to be formed comprises:

encrypting the determined points based on a predetermined shuffle table, and forming the plurality of holes on points indicating the encrypted values.

FIG.1

FIG.2

FIG.3

FIG.4

FIG.5

FIG.6

FIG.7A

FIG.7B

| x | s(x) |
|---|------|
| 0 | 4 |
| 1 | 2 |
| 2 | 3 |
| 3 | 5 |
| 4 | 1 |
| 5 | 6 |
| 6 | 0 |

| s(x) | x |
|------|---|
| 0 | 6 |
| 1 | 4 |
| 2 | 1 |
| 3 | 2 |
| 4 | 0 |
| 5 | 3 |
| 6 | 5 |

# FIG.8A    FIG.8B

| c | $s_c(x)$ | x = 0 | 1 | 2 | 3 | 4 | 5 | 6 |
|---|----------|-------|---|---|---|---|---|---|
| 0 | | 2 | 6 | 4 | 5 | 1 | 3 | 0 |
| 1 | | 4 | 3 | 0 | 6 | 5 | 2 | 1 |
| 2 | | 1 | 4 | 3 | 6 | 0 | 2 | 5 |
| 3 | | 4 | 5 | 1 | 6 | 3 | 0 | 2 |
| 4 | | 3 | 0 | 5 | 2 | 6 | 1 | 4 |
| 5 | | 5 | 2 | 6 | 4 | 1 | 3 | 0 |
| 6 | | 6 | 0 | 4 | 5 | 1 | 2 | 3 |

# FIG.9

START

DETERMINE BASIC PATTERN BLOCK SIZE FOR INDICATING
ABSOLUTE LOCATION OF PIXEL ON DISPLAY PANEL — 101

DETERMINE POINTS WHERE A DENT HOLE CORRESPONDING TO
REFERENCE AND POSITION HOLES FOR INDICATING ABSOLUTE
LOCATION OF PIXEL ARE TO BE FORMED IN SUBPIXELS FOR EACH
BLOCK REGION DETERMINED BASED ON BASIC PATTERN BLOCK SIZE — 104

CALCULATE AND ENCRYPT VALUES OF POSITION HOLES CORRESPONDING
TO LOCATION OF PIXEL INDICATED BY EACH BLOCK REGION — 106

GENERATE PATTERN BY FORMING DENT HOLE AND POSITION
HOLES ON POINT WHERE DENT HOLE IS TO BE FORMED AND POINTS
CORRESPONDING TO ENCRYPTED VALUES OF POSITION HOLES — 108

END

# FIG.10

FIG.11